# EUROPÄISCHE PATENTSCHRIFT

(11) **EP 2 646 281 B1**
(45) Veröffentlichungstag und Bekanntmachung des Hinweises auf die Patenterteilung: **05.10.2016**
(21) Anmeldenummer: 11788379.3
(22) Anmeldetag: 25.11.2011
(51) Int. Cl.: B60N 2/235, B60N 2/433

(54) **BESCHLAG FÜR EINEN FAHRZEUGSITZ**
FITTING FOR A VEHICLE SEAT
ARMATURE POUR UN SIÈGE DE VÉHICULE

(30) Priorität: 01.12.2010 DE 102010053525
(43) Veröffentlichungstag der Anmeldung: 09.10.2013
(73) Patentinhaber: Johnson Controls Components GmbH & Co. KG, 67657 Kaiserslautern (DE)
(72) Erfinder: PETERS, Christoph, 42929 Wermelskirchen (DE)
(74) Vertreter: Liedhegener, Ralf
(86) Internationale Anmeldenummer: PCT/EP2011/005930
(87) Internationale Veröffentlichungsnummer: WO 2012/072216

(56) Entgegenhaltungen:
- EP-B1- 1 806 072
- DE-B3-102005 046 806

## Beschreibung

Die Erfindung betrifft einen Beschlag für einen Fahrzeugsitz mit den Merkmalen des Oberbegriffs des Anspruches 1.

Ein Beschlag dieser Art ist aus der EP 1 195 115 B1 bekannt. Im verriegelten Zustand beaufschlagt der Exzenter mit beiden Exzenternocken die beiden Riegelnocken der zwei Riegel. Der Keilwinkel an dem in Schließrichtung nacheilenden Nockenpaar ist negativ.

Die EP 1 806 072 B1 beschreibt einen Beschlag, dessen Exzenter drei Exzenternocken aufweist und die beiden Riegel entsprechend drei Riegelnocken aufweisen. Das mittlere Nockenpaar ist in im verriegelten Zustand in Kontakt miteinander und weist einen negativen Keilwinkel auf. Beim voreilenden Nockenpaar besteht ein Spalt, ebenso beim nacheilenden Nockenpaar. Im Falle eines äußeren Drehmomentes verschwindet ein Spalt. Das miteinander in Kontakt kommende Nockenpaar kann auf zwei verschiedene Weisen zusammenwirken, da der Exzenternocken zwei unterschiedliche Keilwinkel aufweist, während der Riegelnocken zwei durch einen konkaven Zwischenbereich voneinander getrennte konvexe Bereiche aufweist.

Zur Festigkeitssteigerung eines Beschlages bei gleichzeitigem Toleranzausgleich des Spiels zwischen Riegel und Riegelführung wird in der DE 10 2005 046 806 B3 vorgeschlagen, das jeder Riegel bei verriegeltem Beschlag gegensinnig zu den jeweils benachbarten Riegeln innerhalb der Riegelführungen kippen kann.

Bei einem in der DE 10 2005 046 807 B3 offenbarten Beschlag weist die den Exzenter beaufschlagende Federanordnung zwei ineinander geschachtelte Federn auf, die einem Öffnen des Beschlages entgegen wirken. Eine solche Federanordnung ist jedoch aufwendig zu montieren und bedingt gegenüber einer Federanordnung mit nur einer Feder ein deutliches Mehrgewicht.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Der positive Keilwinkel am ersten Nockenpaar dient dem Sperren des Riegels und dem Toleranzausgleich. Die Normalkraft mit öffnender Komponente wird durch die Reibkräfte selbsthemmend kompensiert. Der negative Keilwinkel am zweiten Nockenpaar dient dem Sperren der Drehung des Exzenters unter Belastung. Die Normalkraft weist eine schließende Komponente auf. Im verriegelten Zustand liegt der erste Exzenternocken am ersten Riegelnocken an. Ohne äußeres Drehmoment auf die Lehne besteht jedoch zwischen dem zweiten Exzenternocken und dem zweiten Riegelnocken ein Spalt. Erst ab einem bestimmten äußeren Drehmoment auf die Lehne kommen der zweite Exzenternocken und der zweite Riegelnocken an einem zweiten Kontaktpunkt in Kontakt miteinander. Je nach Lastrichtung auf die Lehne ist es von Vorteil, wenn der erste Exzenternocken entweder der Schließrichtung des Exzenters voreilt oder nacheilt.

Die Erfindung ist nicht auf eine bestimmte Anzahl von Riegeln beschränkt. Vorzugsweise beträgt die Anzahl der Riegel zwei, drei oder vier. Bei Beschlägen mit mehreren Riegeln lässt sich die Festigkeit des Beschlages zusätzlich optimieren, indem von zwei benachbarten Riegeln einer der beiden Riegel einen in Schließrichtung voreilenden ersten Exzenternocken und der andere der beiden Riegel einen in Schließrichtung nacheilenden ersten Exzenternocken aufweist. Die beschriebene laststeigernde Wirkung kann so für beide auf die Lehne einwirkende Lastrichtungen (in und gegen Fahrtrichtung) optimal genutzt werden. Bei Beschlägen mit einer geradzahligen Anzahl von Riegeln können zwei radial gegenüberliegende Riegel auch so gestaltet sein, dass einer der beiden gegenüberliegenden Riegel einen in Schließrichtung voreilenden ersten Exzenternocken und der andere der beiden Riegel einen in Schließrichtung nacheilenden ersten Exzenternocken aufweist.

Im folgenden ist die Erfindung anhand eines in der Zeichnung dargestellten Ausführungsbeispiels näher erläutert. Es zeigen
Fig. 1 eine Teilansicht im Bereich zwischen dem Exzenter und einem Riegel,

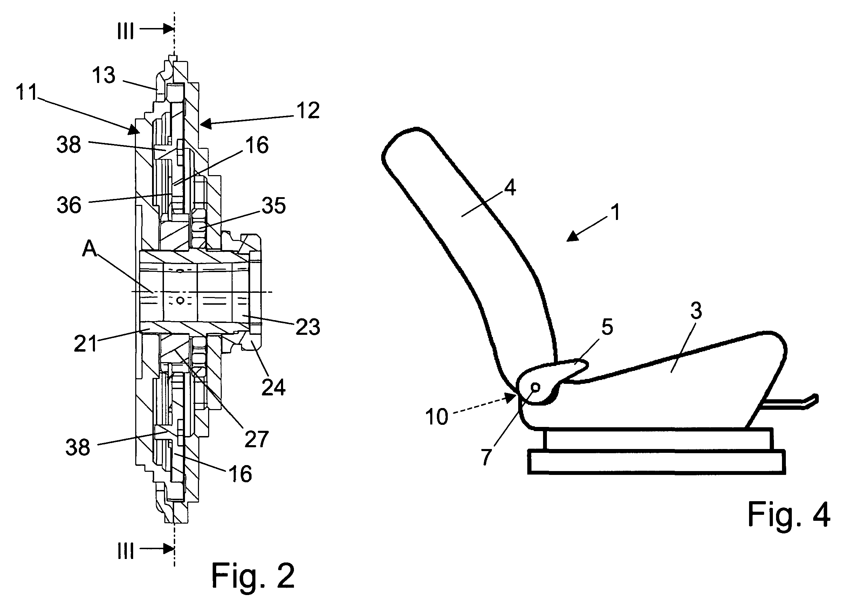

Fig. 2 einen axialen Schnitt durch das Ausführungsbeispiel,

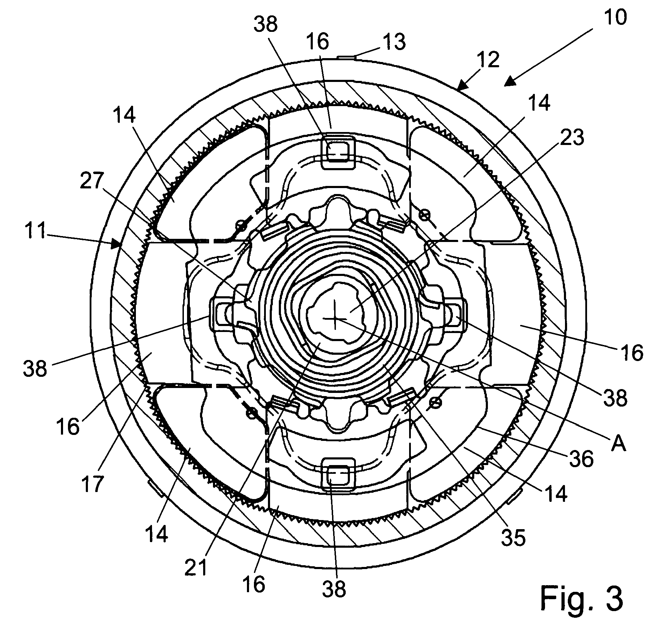

Fig. 3 einen radialen Schnitt durch das Ausführungsbeispiel entlang der Linie III-III in Fig. 2, und
Fig. 4 eine schematische Darstellung eines Fahrzeugsitzes.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handhebels 5, eine Übertragungsstange 7 gedreht, welche horizontal im Übergangsbereich zwischen Sitzteil 3 und Lehne 4 angeordnet ist. Auf beiden Seiten des Fahrzeugsitzes 1 greift die Übertragungsstange 7 in einen Beschlag 10 ein. Die Übertragungsstange 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander um eine Achse A verdrehbar sind. Die (gedachte) Achse A fluchtet vorliegend mit der Übertragungsstange 7. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist vorzugsweise eine im wesentlichen flache Ringform auf, kann aber in alternativer Ausführung L-förmig profiliert mit einem Zylinderabschnitt und stirnseitig einem flachen Ringabschnitt sein.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise mittels Laserschweißens oder mittels einer anderen an sich bekannten Befestigungstechnik. Mittels eines inneren Ringabschnittes, welcher in einer zu axialen Richtung senkrechten Ebene angeordnet ist, übergreift der Umklammerungsring 13, gegebenenfalls unter Zwischenlage eines Gleitrings, das erste Beschlagteil 11 in dessen radial äußerem Randbereich, ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3.

Der Beschlag 10 ist als Rastbeschlag ausgebildet, bei welchem das erste Beschlagteil 11 und das zweite Beschlagteil 12 miteinander verriegelbar sind, wie es beispielsweise in der DE 10 2006 015 560 B3 beschrieben ist, deren diesbezüglicher Offenbarungsgehalt ausdrücklich einbezogen wird.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90°- versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt. In alternativer Ausführung beträgt die Anzahl der Riegel eins, zwei, drei oder mehr als vier Riegel.

Das erste Beschlagteil 11 ist in einer Vertiefung des zweiten Beschlagteils 12 angeordnet und wird durch dieses radial außen übergriffen, wodurch die beiden Beschlagteile 11 und 12 einander lagern. Dabei ist der radial äußere Randbereich des ersten Beschlagteils 11 mit dem Zahnkranz 17 in radialer Richtung zwischen den Führungssegmenten 14 und dem (der Lagerung des ersten Beschlagteils 11 dienenden) radial äußeren Randbereich des zweiten Beschlagteils 12 angeordnet. Bei hohen Belastungen, beispielsweise im Crashfall, kann das erste Beschlagteil 11 - nach einer Verformung - mit seinem Zahnkranz 17 in Anlage an die in Lastrichtung näher gelegenen Führungssegmente 14 kommen, welche in Richtung zum Zahnkranz 17 entsprechend (konzentrisch) gekrümmte Flächen aufweisen. Dies erhöht die Festigkeit des Beschlags 10.

Das erste Beschlagteil 11 kann im zweiten Beschlagteil 12 gelagert sein. Die Verhältnisse könnten aber genau umgekehrt sein, d.h. das zweite Beschlagteil 12 kann auf dem ersten Beschlagteil 11 gelagert sein. Grundsätzlich sind aber beide Anordnungen gleichwertig.

Im Zentrum des Beschlags 10 ist ein Mitnehmer 21 angeordnet, beispielsweise aus Kunststoff, welcher drehbar an wenigstens einem der beiden Beschlagteile 11 und 12, vorliegend dem ersten Beschlagteil 11, gelagert ist, genauer gesagt in einer zentralen Öffnung desselben. Auf beiden Fahrzeugsitzseiten ist der Mitnehmer 21 drehfest verbunden oder wenigstens auf Mitnahme gekoppelt mit der Übertragungsstange 7, welche in eine Bohrung 23 des hohlen Mitnehmers 21 eingeführt ist und auf welcher der Handhebel 5 drehfest sitzt. An einem Ende des Mitnehmers 21, vorliegend demjenigen am zweiten Beschlagteil 12, ist ein Befestigungsring 24 vorgesehen, welcher vorliegend aus Kunststoff besteht und vorzugsweise mittels Ultraschallschweißens am Mitnehmer 21 befestigt ist. Am Befestigungsring 24 kann der Handhebel 5 drehfest festgeclipst werden. Der Befestigungsring 24 kann auch am anderen Ende des Mitnehmers 21 oder jeweils an beiden Enden vorgesehen sein.

Auf dem Mitnehmer 21 sitzt drehfest oder wenigstens auf Mitnahme gekoppelt ein Exzenter 27, welcher in dem zwischen den Beschlagteilen 11 und 12 definierten Bauraum angeordnet ist. Der Exzenter 27 weist entlang seines Außenumfangs für jeden Riegel 16, also vorliegend viermal, einen ersten Exzenternocken 27a, welcher zum Zusammenwirken mit einem ersten Riegelnocken 16a vorgesehen ist, und - in Umfangsrichtung versetzt dazu - einen zweiten Exzenternocken 27b auf, welcher zum Zusammenwirken mit einem zweiten Riegelnocken 16b vorgesehen ist. Die Exzenternocken 27a und 27b weisen radial nach außen, die Riegelnocken 16a und 16b vom jeweiligen Riegel 16 aus radial nach innen.

Eine Federanordnung 35, beispielsweise eine oder zwei ineinander geschachtelte Spiralfedern, ist in einer zentralen Aufnahme eines der beiden Beschlagteile 11 und 12, vorliegend des zweiten Beschlagteils 12, angeordnet und vorliegend außen abgestützt. Die Federanordnung 35 beaufschlagt den Exzenter 27, vorliegend indem sie innen drehfest auf dem Mitnehmer 21 sitzt. Eine derartige Federanordnung 35 ist beispielsweise in der DE 10 2005 046 807 B3 beschrieben, deren diesbezüglicher Offenbarungsgehalt ausdrücklich einbezogen wird. Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist.

Eine Steuerscheibe 36 ist im Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Lehne 4 ist nun um die Achse A schwenkbar, um ihre Neigung einzustellen, d.h. um eine andere Gebrauchsstellung einzunehmen.

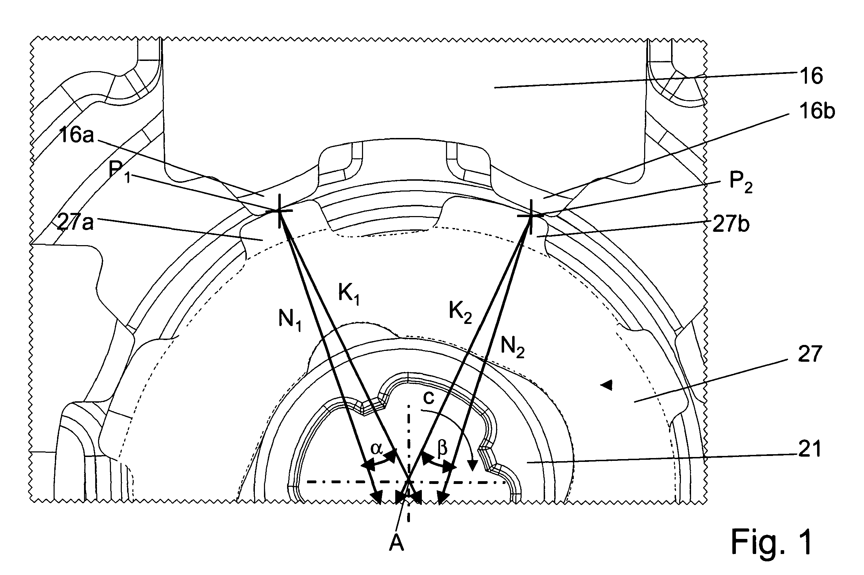

Die Schließrichtung des Exzenters 27 ist die aufgrund der Beaufschlagung durch die Federanordnung 35 schließend wirkende Drehrichtung des Exzenters 27. Im folgenden ist das Zusammenwirken des Exzenters 27 mit einem der Riegel 16 betrachtet, wobei die Schließrichtung in Fig. 1 im Uhrzeigersinn ist, und der erste Exzenternocken 27a in Schließrichtung nacheilt und der zweite Exzenternocken 27b in Schließrichtung voreilt.

Im verriegelten Zustand ohne Belastung der Lehne 4 (d.h. ohne äußeres Drehmoment und nur mit dem durch das Gewicht der Lehne 4 bedingten Drehmoment) beaufschlagt der Exzenter 27 nur mittels seinem ersten Exzenternocken 27a die jeweils zugeordneten ersten Riegelnocken 16a, und zwar an einem ersten Kontaktpunkt P1 (an dem der erste Exzenternocken 27a und der erste Riegelnocken 16a in Kontakt miteinander stehen), während zwischen den zweiten Exzenternocken 27b und den jeweils zugeordneten zweiten Riegelnocken 16b ein Spalt von etwa 0,05 bis 0,5 mm, vorzugsweise etwa 0,25 mm, besteht. Die resultierenden Kräfte K1 an den vier ersten Kontaktstellen P1 gehen jeweils durch den Mittelpunkt des Beschlags 10, also durch die Achse A, so dass sie sich insgesamt aufheben. Im ersten Kontaktpunkt P1 berühren der erste Exzenternocken 27a und der zugeordneten erste Riegelnocken 16a einander, d.h. mit der gleichen Steigung und einer gemeinsamen Tangente. Die Normalkraft N1 im ersten Kontaktpunkt P1, welche senkrecht zu dieser Tangente radial nach innen weist, steht in einem Winkel zur resultierenden Kraft K1, welcher als erster Keilwinkel α bezeichnet ist, und zugleich dem Winkel zwischen der Tangente im ersten Kontaktpunkt P1 und dem Kreisbogen um die Achse A durch den ersten Kontaktpunkt P1 entspricht.

Die Schließrichtung c gibt vor, wie der erste Keilwinkel α gemessen wird. Der erste Keilwinkel α ist positiv, d.h. bildlich gesehen ragen die in Schließrichtung c nacheilenden Bereiche des ersten Exzenternockens 27a radial weiter nach außen als die voreilenden Bereiche, so dass der vom ersten Exzenternocken 27a beaufschlagte Riegel 16 gesperrt wird und ein Toleranzausgleich möglich ist. Die Normalkraft N1 im ersten Kontaktpunkt P1 wirkt öffnend, wird jedoch durch die Reibung selbsthemmend kompensiert, so dass sich die besagte resultierende Kraft K1 ergibt. Der erste Keilwinkel α ist erfindungsgemäß kleiner als 5,7°, vorzugsweise kleiner als 4,5°. Der erste Exzenternocken 27a und der erst e Riegelnocken 16a sind konvex ausgebildete Materialpartien, wenigstens durchgängig in dem Bereich, in dem der erste Kontaktpunkt P1 liegen kann.

Wenn im verriegelten Zustand eine Belastung auf die Lehne 4 wirkt, versucht dieses Drehmoment den Zahnkranz 17 relativ zu den Führungssegmenten 14 zu drehen. Die Riegel 16 sind mit Spiel zwischen den Führungssegmenten 14 geführt und stehen einerseits mit dem Zahnkranz 17 in Eingriff und sind andererseits am zugeordneten ersten Exzenternocken 27a abgestützt. Das Drehmoment auf die Lehne 4 kippt daher die Riegel 16. Wenn das Drehmoment in der Zeichnung gegen den Uhrzeigersinn wirkt, kippt der Riegel 16 nach links (und kontaktiert das linke Führungssegment 14), und die resultierende Kraft im ersten Kontaktpunkt P1 verstärkt sich. Wenn das Drehmoment auf die Lehne 4 in der Zeichnung im Uhrzeigersinn wirkt, kippt der Riegel 16 nach rechts (und kontaktiert das rechte Führungssegment 14). Wenn das Drehmoment auf die Lehne 4 groß genug ist, beispielsweise mehr als 100 Nm, kommen der zweite Exzenternocken 27b und der zweite Riegelnocken 16b in einem zweiten Kontaktpunkt P2 in Kontakt miteinander.

Die resultierenden Kräfte K2 an den vier zweiten Kontaktstellen P2 gehen ebenfalls jeweils durch den Mittelpunkt des Beschlags 10, also durch die Achse A, so dass sie sich insgesamt aufheben. Im zweiten Kontaktpunkt P2 berühren der zweite Exzenternocken 27b und der zugeordneten zweite Riegelnocken 16b einander, d.h. mit der gleichen Steigung und einer gemeinsamen Tangente. Die Normalkraft N2 im zweiten Kontaktpunkt P2, welche senkrecht zu dieser Tangente radial nach innen weist, steht in einem Winkel zur resultierenden Kraft K2, welcher als zweiter Keilwinkel β bezeichnet ist, und zugleich dem Winkel zwischen der Tangente im zweiten Kontaktpunkt P2 und dem Kreisbogen um die Achse A durch den zweiten Kontaktpunkt P2 entspricht. Der zweite Keilwinkel β ist negativ, d.h. bildlich gesehen ragen die in entgegen der Schließrichtung c gelegenen Bereiche des zweiten Riegelnockens 16b radial weiter nach innen als die weiter in Schließrichtung c gelegenen Bereiche. Eine etwaige Drehung des Exzenters 27 entgegen der Schließrichtung c wird so gesperrt. Die Normalkraft N2 im zweiten Kontaktpunkt P2 wirkt daher schließend, wird jedoch durch die Reibung selbsthemmend kompensiert, so dass sich die besagte resultierende Kraft K2 ergibt. Der zweite Keilwinkel β ist erfindungsgemäß betragsmäßig kleiner als 5,7°, vorzugsweise kleiner als 4,5°. Der zweite Exzenternocken 27b und der zweite Riegelnocken 16b sind konvex ausgebildete Materialpartien, wenigstens durchgängig in dem Bereich, in dem der zweite Kontaktpunkt P2 liegen kann.

Die Situation ist an dem diagonal gegenüberliegenden Riegel 16 vorzugsweise wie zuvor beschrieben. Bei den benachbart dazwischen angeordneten Riegeln 16 kann je nach gewünschter Auslegung des Beschlags 10 die gleiche Situation oder die bezüglich der Schließrichtung c spiegelbildliche Situation auftreten, d.h. diese Riegel 16 kippen gegensinnig und die zugehörigen ersten Exzenternocken eilen in Schließrichtung c vor.

### Bezugszeichenliste

- 1: Fahrzeugsitz
- 3: Sitzteil
- 4: Lehne
- 5: Handhebel
- 7: Übertragungsstange
- 10: Beschlag
- 11: erstes Beschlagteil
- 12: zweites Beschlagteil
- 13: Umklammerungsring
- 14: Führungssegment
- 16: Riegel
- 16a: erster Riegelnocken
- 16b: zweiter Riegelnocken
- 17: Zahnkranz
- 21: Mitnehmer
- 23: Bohrung
- 24: Befestigungsring
- 27: Exzenter
- 27a: erster Exzenternocken
- 27b: zweiter Exzenternocken
- 35: Federanordnung
- 36: Steuerscheibe
- 38: Nase
- A: Achse
- c: Schließrichtung
- K1: resultierende Kraft am ersten Kontaktpunkt
- K2: resultierende Kraft am zweiten Kontaktpunkt
- N1: Normalkraft am ersten Kontaktpunkt
- N2: Normalkraft am zweiten Kontaktpunkt
- P1: erster Kontaktpunkt
- P2: zweiter Kontaktpunkt
- α: erster Keilwinkel
- β: zweiter Keilwinkel

## Patentansprüche

1. Beschlag (10) für einen eine Lehne (4) aufweisenden Fahrzeugsitz (1), insbesondere für einen Kraftfahrzeugsitz, mit
a) einem ersten Beschlagteil (11) und einem zweiten Beschlagteil (12), welche relativ zueinander um eine Achse (A) verdrehbar sind, wobei am ersten Beschlagteil (11) ein Zahnkranz (17) und am zweiten Beschlagteil (12) Führungssegmente (14) ausgebildet sind,
b) wenigstens einem Riegel (16), welcher mittels der Führungssegmente (14) geführt zwischen einem verriegelten Zustand und einem entriegelten Zustand radial verschieblich ist, und welcher im verriegelten Zustand mit dem Zahnkranz (17) zusammenwirkt, um den Beschlag (10) zu verriegeln, wobei der wenigstens eine Riegel (16) genau zwei Riegelnocken (16a, 16b) zum Zusammenwirken mit einem drehbar gelagerten Exzenter (27) aufweist, und zwar einen ersten Riegelnocken (16a) und einen zweiten Riegelnocken (16b), und wobei der wenigstens eine Riegel innerhalb einer aus zwei Führungssegmenten bestehenden Riegelführung kippen kann und
c) dem drehbar gelagerten Exzenter (27), welcher beim Übergang vom entriegelten Zustand in den verriegelten Zustand durch Drehung in eine Schließrichtung (c) den Riegel (16) beaufschlagt, wobei der Exzenter (27) für den Riegel (16) genau einen ersten Exzenternocken (27a), welcher zum Zusammenwirken mit dem ersten Riegelnocken (16a) geeignet ist, und genau einen zweiten Exzenternocken (27b), welcher zum Zusammenwirken mit dem zweiten Riegelnocken (16b) geeignet ist, aufweist, wobei im verriegelten Zustand ohne äußeres Drehmoment auf die Lehne (4) der erste Exzenternocken (27a) und der erste Riegelnocken (16a) an einem ersten Kontaktpunkt (P1) in Kontakt miteinander sind,
**dadurch gekennzeichnet, dass**
d) im verriegelten Zustand ohne äußeres Drehmoment auf die Lehne (4) zwischen dem zweiten Exzenternocken (27b) und dem zweiten Riegelnocken (16b) ein Spalt besteht,
e) im verriegelten Zustand ab einem bestimmten äußeren Drehmoment auf die Lehne (4) der zweite Exzenternocken (27b) und der zweite Riegelnocken (16b) an einem zweiten Kontaktpunkt (P2) in Kontakt miteinander sind,
f) im ersten Kontaktpunkt (P1) zwischen dem ersten Exzenternocken (27a) und dem ersten Riegelnocken (16a) ein erster Keilwinkel (α) definiert ist, welcher positiv ist, und
g) im zweiten Kontaktpunkt (P2) zwischen dem zweiten Exzenternocken (27b) und dem zweiten Riegelnocken (16b) ein zweiter Keilwinkel (β) definiert ist, welcher negativ ist.

2. Beschlag nach Anspruch 1, **dadurch gekennzeichnet, dass** der erste Exzenternocken (27a) in Schließrichtung (c) nacheilt und der zweite Exzenternocken (27b) in Schließrichtung (c) voreilt.

3. Beschlag nach Anspruch 1, **dadurch gekennzeichnet, dass** der erste Exzenternocken (27a) in Schließrichtung (c) voreilt und der zweite Exzenternocken (27b) in Schließrichtung (c) nacheilt.

4. Beschlag nach einem der vorhergehenden Ansprüche, **dadurch gekennzeichnet, dass** mehrere, insbesondere vier Riegel (16) vorgesehen sind.

5. Beschlag nach Anspruch 4, **dadurch gekennzeichnet, dass** der Exzenter (27) mit vier Riegeln (16) zusammenwirkt und der Exzenter (27) zum Zusammenwirken mit jedem der Riegel (16) jeweils genau einen ersten Exzenternocken (27a), welcher zum Zusammenwirken mit dem jeweils ersten Riegelnocken (16a) geeignet ist und jeweils genau einen zweiten Exzenternocken (27b), welcher zum Zusammenwirken mit dem jeweils zweiten Riegelnocken (16b) geeignet ist, aufweist.

6. Beschlag nach Anspruch 4 oder 5, **dadurch gekennzeichnet, dass** von zwei benachbarten Riegeln (16) einer der beiden Riegel (16) einen in Schließrichtung (c) voreilenden ersten Exzenternocken (27a) und der andere der beiden Riegel (16) einen in Schließrichtung (c) nacheilenden ersten Exzenternocken (27a) aufweist.

7. Beschlag nach Anspruch 4 oder 5, **dadurch gekennzeichnet, dass** von zwei radial gegenüberliegenden Riegeln (16) einer der beiden Riegel (16) einen in Schließrichtung (c) voreilenden ersten Exzenternocken (27a) und der andere der beiden Riegel (16) einen in Schließrichtung (c) nacheilenden ersten Exzenternocken (27a) aufweist.

8. Beschlag nach Anspruch 7, **dadurch gekennzeichnet, dass** bezüglich der Schließrichtung (c) die Riegel 16 gegensinnig kippen.

9. Beschlag nach einem der vorhergehenden Ansprüche, **dadurch gekennzeichnet, dass** der erste Keilwinkel (α) und/oder der zweite Keilwinkel (β) betragsmäßig kleiner als 5,7° ist, insbesondere kleiner als 4,5°.

10. Beschlag nach einem der vorhergehenden Ansprüche, **dadurch gekennzeichnet, dass** die Keilwinkel (α, β) an den zugeordneten Kontaktpunkten (P1, P2) als Winkel zwischen der resultierenden Kraft (K1, K2) durch die Achse (A) und der Normalkraft (N1, N2) in Schließrichtung (c) definiert sind.

11. Beschlag nach einem der vorhergehenden Ansprüche, **dadurch gekennzeichnet, dass** die Exzenternocken (27a, 27b) und/oder die Riegelnocken (16a, 16b) konvex ausgebildet sind.

12. Beschlag nach einem der vorhergehenden Ansprüche, **gekennzeichnet durch** eine Steuerscheibe (36), welche drehfest mit dem Exzenter (27) verbunden ist und mit Nasen (38) der Riegel (16) zusammenwirkt, um beim Entriegeln den Zahnkranz (17) und die Riegel (16) entgegen der Federbelastung des Exzenters (27) außer Eingriff zu bringen.

13. Beschlag nach einem der vorhergehenden Ansprüche, **dadurch gekennzeichnet, dass** ein Umklammerungsring (13) das erste Beschlagteil (11) und das zweite Beschlagteil (12) axial zusammenhält.

14. Fahrzeugsitz (1), insbesondere Kraftfahrzeugsitz, mit wenigstens einem Beschlag (10) nach einem der vorhergehenden Ansprüche.

## Claims

1. Fitting (10) for a vehicle seat (1), in particular for a motor vehicle seat, which has a backrest (4), having
a) a first fitting member (11) and a second fitting member (12), which can be pivoted relative to each other about an axis (A), a toothed ring (17) being constructed on the first fitting member (11) and guiding segments (14) being constructed on the second fitting member (12),
b) at least one bar (16) which can be radially displaced by means of the guiding segments (14) in a guided manner between a locked state and an unlocked state and which in the locked state co-operates with the toothed ring (17) in order to lock the fitting (10), the at least one bar (16) having precisely two locking cams (16a, 16b) for interacting with a rotatably mounted eccentric (27), to be precise a first locking cam (16a) and a second locking cam (16b), and it being possible for the at least one bar to tilt within a bar guide which comprises two guiding segments, and
c) the rotatably supported eccentric (27) which, during movement from the unlocked state to the locked state by means of rotation in a closure direction (c), acts on the bar (16), the eccentric (27) having for the bar (16) precisely one first eccentric cam (27a) which is suitable for co-operation with the first locking cam (16a) and precisely one second eccentric cam (27b) which is suitable for co-operation with the second locking cam (16b), the first eccentric cam (27a) and the first locking cam (16a) being in contact with each other at a first contact location (P1) in the locked state without any external torque on the backrest (4), **characterized in that**
d) in the locked state without any external torque on the backrest (4) there is a gap between the second eccentric cam (27b) and the second locking cam (16b),
e) in the locked state, from a specific external torque on the backrest (4), the second eccentric cam (27b) and the second locking cam (16b) are in contact with each other at a second contact location (P2),
f) at the first contact location (P1) between the first eccentric cam (27a) and the first locking cam (16a) a first wedge angle (α) which is positive is defined, and
g) at the second contact location (P2) between the second eccentric cam (27b) and the second locking cam (16b) a second wedge angle (ß) which is negative is defined.

2. Fitting according to Claim 1, **characterized in that** the first eccentric cam (27a) follows in the closure direction (c) and the second eccentric cam (27b) leads in the closure direction (c).

3. Fitting according to Claim 1, **characterized in that** the first eccentric cam (27a) leads in the closure direction (c) and the second eccentric cam (27b) follows in the closure direction (c).

4. Fitting according to any one of the preceding claims, **characterized in that** a plurality of bars (16), in particular four bars, are provided.

5. Fitting according to Claim 4, **characterized in that** the eccentric (27) co-operates with four bars (16) and the eccentric (27) for co-operation with each of the bars (16) has precisely one first eccentric cam (27a) which is suitable for co-operation with the first locking cam (16a), respectively, and precisely one second eccentric cam (27b) which is suitable for co-operation with the second locking cam (16b), respectively.

6. Fitting according to Claim 4 or Claim 5, **characterized in that**, of two adjacent bars (16), one of the two bars (16) has a leading first eccentric cam (27a) in the closure direction (c) and the other of the two bars (16) has a following first eccentric cam (27a) in the closure direction (c).

7. Fitting according to Claim 4 or Claim 5, **characterized in that**, of two radially opposing bars (16), one of the two bars (16) has a leading first eccentric cam (27a) in the closure direction (c) and the other of the two bars (16) has a following first eccentric cam (27a) in the closure direction (c).

8. Fitting according to Claim 7, **characterized in that** the bars (16) tilt in opposing directions with respect to the closure direction (c).

9. Fitting according to any one of the preceding claims, **characterized in that** the first wedge angle (α) and/or the second wedge angle (ß) has/have a value smaller than 5.7°, in particular smaller than 4.5°.

10. Fitting according to any one of the preceding claims, **characterized in that** the wedge angles (α, ß) at the associated contact locations (P1, P2) are defined as angles between the resultant force (K1, K2) through the axis (A) and the normal force (N1, N2) in the closure direction (c).

11. Fitting according to any one of the preceding claims, **characterized in that** the eccentric cams (27a, 27b) and/or the locking cams (16a, 16b) are constructed in a convex manner.

12. Fitting according to any one of the preceding claims, **characterized by** a control cam (36) which is connected to the eccentric (27) in a rotationally secure manner and which co-operates with projections (38) of the bars (16) in order during unlocking to bring the toothed ring (17) and the bars (16) out of engagement counter to the resilient loading of the eccentric (27).

13. Fitting according to any one of the preceding claims, **characterized in that** a gripping ring (13) axially holds together the first fitting member (11) and the second fitting member (12).

14. Vehicle seat (1), in particular a motor vehicle seat, having at least one fitting (10) according to any one of the preceding claims.

## Revendications

1. Ferrure (10) pour un siège de véhicule (1) présentant un dossier (4), en particulier pour un siège de véhicule automobile, comprenant :
a) une première partie de ferrure (11) et une deuxième partie de ferrure (12) qui peuvent tourner l'une par rapport à l'autre autour d'un axe (A), une couronne dentée (17) étant réalisée au niveau de la première partie de ferrure (11) et des segments de guidage (14) étant réalisés au niveau de la deuxième partie de ferrure (12),
b) au moins un verrou (16) qui peut être déplacé radialement de manière guidée au moyen des éléments de guidage (14) entre un état verrouillé et un état déverrouillé et qui, dans l'état verrouillé, coopère avec la couronne dentée (17) pour verrouiller la ferrure (10), l'au moins un verrou (16) présentant exactement deux cames de verrouillage (16a, 16b), à savoir une première came de verrouillage (16a) et une deuxième came de verrouillage (16b), destinées à coopérer avec un excentrique (27) supporté à rotation, et l'au moins un verrou pouvant basculer à l'intérieur d'un guide de verrou constitué de deux segments de guidage et
c) l'excentrique (27) supporté à rotation, qui, lors de la transition de l'état déverrouillé dans l'état verrouillé, sollicite le verrou (16) par rotation dans une direction de fermeture (c), l'excentrique (27) pour le verrou (16) présentant exactement une première came d'excentrique (27a) qui est prévue pour coopérer avec la première came de verrouillage (16a) et exactement une deuxième came d'excentrique (27b) qui est prévue pour coopérer avec la deuxième came de verrouillage (16b), la première came d'excentrique (27a) et la première came de verrouillage (16a), dans l'état verrouillé sans couple extérieur appliqué au dossier (4), étant en contact l'une avec l'autre au niveau d'un premier point de contact (P1),
**caractérisée en ce que**
d) dans l'état verrouillé sans couple extérieur appliqué au dossier (4), une fente existe entre la deuxième came d'excentrique (27b) et la deuxième came de verrouillage (16b),
e) dans l'état verrouillé, à partir d'un couple extérieur déterminé appliqué au dossier (4), la deuxième came d'excentrique (27b) et la deuxième came de verrouillage (16b) sont en contact l'une avec l'autre au niveau d'un deuxième point de contact (P2),
f) un premier angle de coin (α) est défini au niveau du premier point de contact (P1) entre la première came d'excentrique (27a) et la première came de verrouillage (16a), lequel est positif et
g) un deuxième angle de coin (β) est défini au niveau du deuxième point de contact (P2) entre la deuxième came d'excentrique (27b) et la deuxième came de verrouillage (16b), lequel est négatif.

2. Ferrure selon la revendication 1, **caractérisée en ce que** la première came d'excentrique (27a) est en retard dans la direction de fermeture (c) et la deuxième came d'excentrique (27b) est en avance dans la direction de fermeture (c).

3. Ferrure selon la revendication 1, **caractérisée en ce que** la première came d'excentrique (27a) est en avance dans la direction de fermeture (c) et la deuxième came d'excentrique (27b) est en retard dans la direction de fermeture (c).

4. Ferrure selon l'une quelconque des revendications précédentes, **caractérisée en ce que** plusieurs verrous, notamment quatre verrous (16), sont prévus.

5. Ferrure selon la revendication 4, **caractérisée en ce que** l'excentrique (27) coopère avec quatre verrous (16) et l'excentrique (27), pour coopérer avec chacun des verrous (16), présente à chaque fois exactement une première came d'excentrique (27a) qui est appropriée pour coopérer avec la première came de verrou respective (16a) et à chaque fois exactement une deuxième came d'excentrique (27b) qui est appropriée pour coopérer avec la deuxième came de verrou respective (16b).

6. Ferrure selon la revendication 4 ou 5, **caractérisée en ce que** parmi deux verrous adjacents (16), l'un des deux verrous (16) présente une première came d'excentrique (27a) en avance dans la direction de fermeture (c) et l'autre des deux verrous (16) présente une première came d'excentrique (27a) en retard dans la direction de fermeture (c).

7. Ferrure selon la revendication 4 ou 5, **caractérisée en ce que** parmi deux verrous radialement opposés (16), l'un des deux verrous (16) présente une première came d'excentrique (27a) en avance dans la direction de fermeture (c) et l'autre des deux verrous (16) présente une première came d'excentrique (27a) en retard dans la direction de fermeture (c).

8. Ferrure selon la revendication 7, **caractérisée en ce que** par rapport à la direction de fermeture (c), les verrous (16) basculent en sens opposé.

9. Ferrure selon l'une quelconque des revendications précédentes, **caractérisée en ce que** le premier angle de coin (α) et/ou le deuxième angle de coin (β), en valeur absolue, est inférieur à 5,7°, en particulier est inférieur à 4,5°.

10. Ferrure selon l'une quelconque des revendications précédentes, **caractérisée en ce que** les angles de coin (α, β) au niveau des points de contacts associés (P1, P2) sont définis en tant qu'angles entre la force résultante (K1, K2) passant par l'axe (A) et la force normale (N1, N2) dans la direction de fermeture (c).

11. Ferrure selon l'une quelconque des revendications précédentes, **caractérisée en ce que** les cames d'excentrique (27a, 27b) et/ou les cames de verrouillage (16a, 16b) sont réalisées sous forme convexe.

12. Ferrure selon l'une quelconque des revendications précédentes, **caractérisée par** un disque de commande (36) qui est connecté de manière solidaire en rotation à l'excentrique (27) et qui coopère avec des ergots (38) des verrous (16), afin de désengager la couronne dentée (17) et le verrou (16) à l'encontre de la sollicitation par ressort de l'excentrique (27), dans le cas d'un déverrouillage.

13. Ferrure selon l'une quelconque des revendications précédentes, **caractérisée en ce qu'**une bague de serrage (13) retient axialement la première partie de ferrure (11) et la deuxième partie de ferrure (12).

14. Siège de véhicule (1), en particulier siège de véhicule automobile, comprenant au moins une ferrure (10) selon l'une quelconque des revendications précédentes.
